Europäisches Patentamt

European Patent Office

Office européen des brevets

(19)

(11) Numéro de publication: **0 064 464**

**A1**

## (12) DEMANDE DE BREVET EUROPEEN

(21) Numéro de dépôt: 82400793.4

(22) Date de dépôt: 30.04.82

(51) Int. Cl.³: **B 01 J 23/06**
B 01 J 29/08, B 01 J 20/18
C 10 G 25/05

(30) Priorité: 04.05.81 FR 8108779

(43) Date de publication de la demande:
10.11.82 Bulletin 82/45

(84) Etats contractants désignés:
BE DE GB IT NL

(71) Demandeur: COMPAGNIE FRANCAISE DE RAFFINAGE
Société anonyme dite:
5, rue Michel-Ange
F-75781 Paris Cedex 16(FR)

(72) Inventeur: Muller, Alain
17, Avenue Foch
F-76600 Le Havre(FR)

(74) Mandataire: Jolly, Jean-Pierre et al,
Cabinet BROT 83, rue d'Amsterdam
F-75008 Paris(FR)

(54) Masses de contact pour la désulfuration de charges d'hydrocarbures.

(57) Ces masses comprennent un support minéral réfractaire sur lequel est déposé du cadmium à l'état libre ou combiné

Elles conviennent notamment pour la désulfuration de charges d'hydrocarbures, spécialement de charges contenant moins de 1000 p.p.m, exprimé en soufre élémentaire, de composés soufrés.

EP 0 064 464 A1

Masses de contact pour la désulfuration de charges d'hydrocarbures.

La présente invention concerne des masses de contact pour la désulfuration de charges d'hydrocarbures. Elle concerne plus particulièrement la désulfuration de charges d'hydrocarbures contenant des quantités faibles de composés soufrés et, notamment, de celles contenant moins de 1000 p.p.m, exprimé en soufre élémentaire, de composés soufrés.

Les charges d'hydrocarbures, telles que celles provenant de la distillation du pétrole brut, sont de façon habituelle désulfurées, en présence d'hydrogène, par mise en contact avec un catalyseur d'hydrogénation. Des catalyseurs utilisés de façon usuelle sont constitués par des métaux des Groupes VIA et VIII, tels que le molybdène et le cobalt, déposés sur des supports en oxyde minéral réfractaire comme l'alumine.

Le soufre contenu dans la charge est transformé en hydrogène sulfuré, qui est ensuite séparé de la charge par des moyens classiques. Bien que de tels procédés puissent permettre d'obtenir des charges d'hydrocarbures ne contenant plus que quelques p.p.m, exprimé en soufre élémentaire, de composés soufrés, cette concentration est encore trop élevée, dans certains cas, pour l'utilisation ultérieure de ces charges d'hydrocarbures.

C'est le cas, notamment, pour les charges d'hydrocarbures provenant de la distillation du pétrole brut sous pression atmosphérique et destinées à alimenter les unités de reformage catalytique pour la production d'essences d'indice d'octane élevé. Il est bien connu que les catalyseurs de reformage, à base généralement de platine déposé sur de l'alumine, sont facilement empoisonnés par le soufre. Il est donc nécessaire d'éliminer aussi parfaitement que possible le soufre contenu dans les charges des unités de reformage.

Il est déjà connu d'utiliser dans ce but des masses de contact composées d'un oxyde d'un métal comme le cuivre, déposé sur de l'alumine, pour désulfurer de telles charges (voir, par exemple, le brevet US n° 4 113 606).

La Demanderesse a trouvé un nouveau moyen pour désulfurer des charges d'hydrocarbures.

Le but de la présente invention est donc la désulfuration aussi complète que possible de charges d'hydrocarbures.

A cet effet, l'invention a pour objet des masses de contact pour la désulfuration d'une charge d'hydrocarbures, lesdites masses étant caractérisées en ce qu'elles comprennent un support minéral réfractaire sur lequel est déposé du cadmium, à l'état libre ou combiné.

L'invention a également pour objet l'application desdites masses à la désulfuration de charges d'unités de reformage.

Selon l'invention, la masse de contact est composée d'un support minéral réfractaire, qui peut être choisi, par exemple, dans le groupe constitué par l'alumine, les alumino-silicates, comme les zéolites, telles les zéolites X ou Y, et les argiles.

Ce support peut avoir une surface spécifique comprise entre 15 et 900 $m^2$/gramme, de préférence entre 100 et 700 $m^2$/gramme, et un volume poreux spécifique compris entre 0,1 et 2 $cm^3$ par gramme et, de préférence, entre 0,3 et 1,2 $cm^3$ par gramme.

Les masses de contact selon l'invention peuvent contenir de 0,1 à 50 % en poids et, de préférence, de 3 à 30 % en poids, rapporté au poids total de la masse de contact, de cadmium.

Le cadmium peut être sous forme libre ou combinée, par exemple sous forme d'oxyde.

Les masses de contact selon l'invention peuvent contenir, en outre, au moins un élément choisi dans le groupe constitué par les éléments des groupes IB, IIB et VIII de la classification périodique.

Les masses de contact selon l'invention peuvent contenir de 0,1 à 50 % en poids et, de préférence, de 5 à 50 % en poids, rapporté au poids total de la masse de contact, d'un au moins des éléments choisi dans le groupe défini ci-dessus.

Les masses de contact selon l'invention peuvent être préparés par imprégnation du support par une solution contenant au moins un composé du cadmium, évaporation de la solution, séchage à une température de préférence au moins égale à 100°C, puis calcination à une température comprise entre 400 et 700°C.

Comme indiqué précédemment, les masses de contact selon l'invention sont particulièrement utiles pour la désulfuration des charges de reformage contenant moins de 1000 p.p.m, exprimé en soufre élémentaire, de composés soufrés.

Les condition opératoires dans lesquelles peuvent être utilisées les masses du contact selon l'invention sont les suivantes :

- température : comprise entre 20°C et 300°C,
- pression : comprise entre 1 et 50 bars,
- vitesse spatiale horaire de la charge (volume de liquide passant par heure sur une unité de volume de masse de contact) : comprise entre 1 et 30.

Les exemples qui suivent, et qui n'ont aucun caractère limitatif, concernent la préparation de masses de contact selon l'invention, et des essais de désulfuration à l'aide des masses de contact préparées, ainsi que la préparation de masses de contact témoin contenant de l'oxyde de cuivre et des essais effectués avec ces masses.

## EXEMPLE 1

Cet exemple concerne la préparation de masses de contact A, B, C, D, E et F selon l'invention et d'une masse de contact témoin T1, à partir d'un support constitué par de l'alumine, et des essais de désulfuration à l'aide des masses de contact préparées.

## PREPARATION DES MASSES DE CONTACT

On prépare les masses de contact à partir de billes d'alumine, dont les caractéristiques sont les suivantes :

- diámètre moyen des billes : 2 mm,
- masse volumique : 0,7 g/ml,
- surface spécifique : 230 $m^2$/g,
- volume poreux : 0,5 $cm^3$/g.

On imprègne 50 g d'alumine avec 400 ml d'une solution aqueuse contenant un (ou des) sel(s) précurseur(s) du (ou des) oxyde(s) du (ou des) métal (métaux) que l'on veut déposer sur l'alumine.

L'imprégnation se fait par circulation de la solution durant 4 heures, en laissant ensuite l'alumine dans la solution sans circulation pendant 16 heures.

On évapore ensuite l'eau sous pression réduite à 65°C.

Le solide obtenu est ensuite séché à 120°C, durant 16 heures, puis calciné à 550°C, pendant 7 heures.

Les compositions des masses de contact ainsi préparées, ainsi que la nature des sels de départ, sont données dans le Tableau I ci-après.

## TABLEAU I

| Masse | Sel(s) de départ | Composition en % en poids d'oxyde(s) par rapport au poids total | | | |
|---|---|---|---|---|---|
| | | Cd O | cu O | Zn O | Co O |
| A | $CdCl_2 - 2,5 H_2O$ | 20 | 0 | 0 | 0 |
| B | $CdCl_2, 2,5 H_2O$ $CuCl_2, 2 H_2O$ | 10 | 10 | 0 | 0 |
| C | - d° - | 10 | 20 | 0 | 0 |
| D | - d° - | 20 | 10 | 0 | 0 |
| E | $CdCl_2, 2,5 H_2O$ $ZnCl_2$ | 10 | 0 | 10 | 0 |
| F | $CdCl_2, 2,5 H_2O$ $CoCl_2, 6H_2O$ | 10 | 0 | 0 | 10 |
| $T_1$ | $CuCl_2, 2 H_2O$ | 0 | 20 | 0 | 0 |

## ESSAIS DE DESULFURATION

L'activité désulfurante des masses de contact
A, B, C, D, E, F et $T_1$ est testée dans des essais
de désulfuration.

Cette activité est testée dans un réacteur en
phase liquide et en l'absence d'hydrogène sur une
charge d'hydrocarbures constituée par une essence
dont le point initial d'ébullition est 80°C et le
point final 175°C.

Cette essence contient 100 p.p.m de soufre, sous
forme de mercaptans (30 % en poids) et de thioéthers
(70 % en poids).

Les conditions expérimentales sont les suivantes :
- volume du réacteur : 30 cm$^3$,
- volume de la masse de contact : 25 cm$^3$,

-6-

- température : 150°C,

- pression : 20 bars,

- vitesse spatiale horaire de la charge : 8.

On mesure l'activité stationnaire, qui est l'activité relevée au bout de 6 heures de traitement de la charge. Ce temps correspond à une mise en régime stable de la masse désulfurante. Ce palier traduit une absence de vieillissement.

Les résultats sont donnés dans le Tableau II ci-après :

TABLEAU II

| Masse | Taux de désulfuration, en % en poids (activité stationnaire au bout de 6 heures). |
|---|---|
| A | 65 |
| B | 71 |
| C | 84 |
| D | 85 |
| E | 77 |
| F | 59 |
| $T_1$ | 56 |

Ce Tableau montre bien l'efficacité des masses de contact selon l'invention pour la désulfuration de charges d'hydrocarbures. Cette efficacité est meilleure que celle de la masse connue $T_1$.

EXEMPLE 2

Cet exemple concerne la préparation de masses de contact G et H selon l'invention et d'une masse de contact témoin T2 à partir de supports constitués par des zéolites, et des essais de désulfuration à l'aide des masses de contact préparées.

## PREPARATION DES MASSES DE CONTACT

### MASSE DE CONTACT G

On dispose d'une zéolite $Y-NH_4^+$, sous forme de bâtonnets ayant un diamètre moyen de 1,6 mm. Cette zéolite a une surface spécifique de 530 $m^2/g$.

On imprègne 40 g de zéolite $Y-NH_4^+$, avec 5000 ml d'une solution aqueuse contenant 20 g de nitrate de cuivre $Cu(NO_3)_2$, $3H_2O$ et 20 g de nitrate de cadmium $Cd(NO_3)_2$, $4H_2O$. L'imprégnation est effectuée pendant 8 heures à la température ambiante. L'opération est effectuée deux fois, puis on récupère les bâtonnets par filtration. On les rince ensuite avec de l'eau, on les sèche à 100°C pendant 16 heures, puis on les calcine pendant 2 heures à 500°C.

On obtient ainsi la masse G contenant, en % en poids, 6,25 % d'oxyde de cuivre CuO et 5,7 % d'oxyde de cadmium.

### MASSE DE CONTACT H

On dispose d'une zéolite $X-Na^+$, sous forme de bâtonnets ayant un diamètre moyen de 1,5 mm. Cette zéolite a une surface spécifique de 600 $m^2/g$.

On imprègne 80 g de zéolite $X-Na^+$ avec 5000 ml d'une solution aqueuse contenant 60 g de sulfate de cuivre $CuSO_4$, $5H_2O$ et 20 g de sulfate de cadmium $Cd SO_4$, $8H_2O$. L'imprégnation est effectuée pendant 24 heures à la température ambiante. L'opération est effectuée deux fois, puis on récupère les bâtonnets par filtration. On les rince ensuite avec de l'eau, on les sèche à 100°C pendant 16 heures, puis on les calcine pendant 2 heures à 500°C.

On obtient ainsi la masse H contenant, en % en poids, 8,75 % d'oxyde de cuivre CuO et 6,3 % d'oxyde de cadmium CdO.

### MASSE DE CONTACT T2

On utilise la même zéolite que pour la masse H.

On imprègne 80 g de zéolite X-Na$^+$ avec 5000 ml d'une solution aqueuse contenant 80 g de sulfate de cuivre CuSO4, 5H$_2$O. L'imprégnation est effectuée pendant 12 heures à la température ambiante. L'opération est effectuée deux fois, puis les bâtonnets sont rincés, séchés et calcinés de la même façon que pour la préparation de la masse H.

On obtient ainsi la masse T2, contenant, en % en poids, 10 % d'oxyde de cuivre CuO.

ESSAIS DE DESULFURATION

L'activité désulfurante des masses de contact G, H et T2 est testée dans des essais semblables à ceux des essais de l'exemple 1.

Par rapport à ces essais, les seules différences sont les suivantes :

- la vitesse spatiale horaire de la charge est de 10 et non de 8,

- deux essais sont effectués pour chaque masse, à 100°C et 150°C.

Les résultats sont donnés dans le Tableau III ci-après :

TABLEAU III

| Masse | Température en °C | Taux de désulfuration, en % en poids (activité stationnaire au bout de 6 heures) |
|-------|-------------------|-------------------------------------------------------------------------------|
| G | 100 | 97 |
|   | 150 | 98 |
| H | 100 | 94 |
|   | 150 | 97 |
| T2 | 100 | 85 |
|    | 150 | 90 |

Ce tableau montre l'efficacité des masses de contact selon l'invention pour la désulfuration de charges d'hydrocarbures. La comparaison des masses H et T2 préparées à partir d'un même support permet en particulier de voir que la masse H est meilleure.

REVENDICATIONS

1.- Masses de contact utilisables notamment pour la désulfuration de charges d'hydrocarbures, lesdites charges étant caractérisées en ce qu'elles comprennent un support minéral réfractaire sur lequel est déposé du cadmium à l'état libre ou combiné.

2.- Masses de contact selon la revendication 1, caractérisées en ce qu'elles contiennent en outre au moins un élément choisi dans le groupe constitué par les éléments des groupes IB, IIB et VIII de la classification périodique.

3. Masses de contact selon l'une des revendications 1 et 2, caractérisées en ce qu'elles contiennent de 0,1 à 50 % en poids et, de préférence, de 3 à 30 % en poids de cadmium.

4.- Masses de contact selon l'une des revendications 2 et 3, caractérisées en ce qu'elles contiennent de 0,1 à 50 % en poids et, de préférence, de 3 à 30 % en poids d'au moins un élément choisi dans le groupe constitué par les éléments des groupes IB, IIB et VIII de la classification périodique.

5.- Masses de contact selon l'une des revendications 1 à 4, caractérisées en ce que le support est choisi dans le groupe constitué par l'alumine et les zéolites X et Y.

6.- Masses de contact selon l'une des revendications 1 à 5, caractérisées en ce que le support a une surface spécifique comprise entre 15 et 900 $m^2/$gramme, de préférence entre 100 et 700 $m^2/$gramme, et un volume poreux spécifique compris entre 0,1 et 2 $cm^3$ par gramme et, de préférence, entre 0,3 et 1,2 $cm^3$ par gramme.

7.- Procédé de désulfuration d'une charge d'hydrocarbures, notamment d'une charge contenant moins de 1000 p.p.m, exprimé en soufre élémentaire, de composés soufrés, ce procédé étant caractérisé en ce que l'on met en présence, dans des conditions connues en soi, ladite charge et une masse de contact selon l'une des revendications 1 à 6.

0064464

Office européen
des brevets

RAPPORT DE RECHERCHE EUROPEENNE

Numero de la demande

EP 82 40 0793

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl ³) |
|---|---|---|---|
| XY | US - A - 2 442 982 (FREDERICK NACHOD)<br><br>* en entier * | 1-7 | B 01 J 23/06<br>B 01 J 29/08<br>B 01 J 20/18<br>C 10 G 25/05 |
| Y | US - A - 3 406 123 (EUGENE SENSEL et al)<br><br>* colonne 2, ligne 44 - colonne 3, ligne 35; revendications 1,12 * | 1,5,7 | |
| Y | US - A - 4 224 191 (KEITH BISHOP)<br><br>* en entier * | 2,4-7 | |
| A | US - A - 3 444 257 (PHILIPPE, ENGELHARD et al.)<br><br>* colonne 3, lignes 53-75; colonne 4, ligne 70 - colonne 5, ligne 13; revendications 1,3,4 * | 1,3,5,6 | |
| A | US - A - 3 364 135 (ROWLAND HANS-FORD et al.) | | |

**DOMAINES TECHNIQUES RECHERCHES (Int. Cl. ³)**

B 01 J 20/00
B 01 J 23/00
B 01 J 29/00
C 10 J 25/00

Le present rapport de recherche a ete etabli pour toutes les revendications

| Lieu de la recherche | Date d'achevement de la recherche | Examinateur |
|---|---|---|
| LA HAYE | 05-07-1982 | HÖFER |